# EUROPEAN PATENT APPLICATION

(11) **EP 4 764 942 A1**
(43) Date of publication of application: **24.06.2026**
(21) Application number: 24221416.1
(22) Date of filing: 19.12.2024
(51) Int. Cl.: G06F 40/51, G06F 40/30, G06F 40/263

(54) **UNIVERSAL LANGUAGE TRANSLATOR WITH LLMS**

(71) Applicant: Trimble Inc, Westminster CO 80021 (US)
(72) Inventor: VOLLATH, Ulrich, 85635 Hoehenkirchen-Siegertsbrunn (DE)
(74) Representative: Pfundner, Benjamin Patrick

(57) **Abstract**

A computer-implemented method is disclosed, comprising: receiving, by one or more large language models (LLMs), system prompts causing the LLMs to perform a system method. The system method comprises: detecting the source language of a source text in natural language; determining, based on a user prompt, a target language; generating a first translation by translating the source text to the target language; generating a back translation by translating the first translation to the source language; comparing the back translation with the source text to identify inconsistencies; determining whether the inconsistencies exceed an error threshold; if the threshold is exceeded, generating a second translation of the source text to the target language; if not, outputting the first translation; processing, by the LLMs, the system prompts; receiving, by the LLMs, via a user device, a prompt containing the source text; and providing, by the LLMs, the first or second translation.

## Description

### TECHNICAL FIELD

The present disclosure relates to systems and methods for using large language models to provide a translation of a natural language source text from a source language into a target language based on a user prompt.

### BACKGROUND

Traditionally, systems designed to provide natural language translations of text between natural languages have been constrained by the need for manual quality assurance and validation to maintain translation accuracy. This reliance on human intervention introduces inefficiencies into the process, leading to wasted resources and significant delays. The validation and refinement of translations often creates bottlenecks that hinder scalability and operational effectiveness.

Accordingly, it would be advantageous to provide systems and methods which address the above-mentioned problems.

### SUMMARY

This summary is provided to introduce in simplified form a selection of concepts that are further described herein. The summary is not intended to identify key or essential features of the invention.

A first aspect of the present disclosure comprises a computer-implemented method, wherein the computer-implemented method comprises: receiving, by one or more large language models, LLMs , one or more natural language system prompts which, when processed, causes the one or more LLMs to perform a system method; processing, by the one or more LLMs, the one or more system prompts; receiving, by the one or more LLMs, via a user device, a user prompt comprising the source text; and, providing, by the one or more LLMs, using the system method, the first translation or the second translation. The system method can comprise: detecting the source language of a source text, wherein the source text is provided in natural language; determining, based on a user prompt, a target language; generating, a first translation by translating the source text from the source language to the target language; generating, a back translation by translating the first translation from the target language to the source language; comparing, the back translation with the source text to determine one or more inconsistencies; determining whether the one or more inconsistencies exceed an error threshold. The system method further comprises, based on the one or more inconsistencies exceeding the error threshold, generating, based on the one or more inconsistencies, a second translation by translating the source text from the source language to the target language. The system method further comprises, based on the one or more inconsistencies not exceeding the error threshold outputting, to a user, the first translation.

In some embodiments, generating the first translation, generating the back translation, and generating the second translation can comprise using a first agent mode. Comparing the back translation with the source text can comprise using a second agent mode.

In some embodiments, using the first agent mode comprises configuring a first LLM of the one or more LLMs as a translation system. Using the second agent mode can comprise configuring the second LLM of the one or more LLMs as a quality assurance system.

In some embodiments, the first LLM and the second LLM are different LLMs and the second LLM can have less parameters and/or weights than the first LLM.

In some embodiments, the method further comprises: providing one or more translation files comprising pre-translated phrases wherein the one or more translation files are each language specific and/or domain specific. Generating the first translation, generating the back translation and/or generating the second translation can comprise translating, using a translation file of the one or more translation files.

In some embodiments, the one or more inconsistences comprise at least one of: changed semantic meaning; omissions of concepts, information and/or facts; and additions of concepts, information and/or facts.

In some embodiments, determining whether the one or more inconsistencies exceeds an error threshold comprises: determining an error score based on the one or more inconsistencies; and comparing the error score to the error threshold.

In some embodiments, determining an error score based on the one or more inconsistencies comprises determining one or more of: a Levenshtein distance; a Jaccard similarity; a cosine similarity ;a word embedding similarity; a topic modelling score; an alignment score; a BERT similarity score; a universal sentence encoder similarity score; a Bilingual Evaluation Understudy (BLEU) score; a Metric for Evaluation of Translation with Explicit Ordering (METEOR); a Kullback-Leibler Divergence (KLD) score; and a Dynamic Time Warping (DTW) score.

In some embodiments, the method further comprises, based on the one or more inconsistencies meeting the error threshold, updating an inconsistency history file. Generating the first translation, generating the back translation and/or generating the second translation can comprise translating based on the inconsistency history file.

In some embodiments, generating, based on the one or more inconsistencies, a second translation comprises using, by the LLM, the one or more inconsistencies as negative examples.

In some embodiments, the method further comprises, generating, a second back translation by translating the second translation from the target language to the source language; comparing, the second back translation with the source text to determine one or more further inconsistencies; determining the one or more further inconsistencies do not exceed an error threshold; and, based on the one or more further inconsistencies not exceeding the error threshold, outputting, to a user, the second translation.

A second aspect of the present disclosure comprises a processing device comprising: one or more LLMs; a communication means; and, a memory. The processing device is configured to perform the methods of the present disclosure.

### BRIEF DESCRIPTION OF THE DRAWINGS

Aspects of the present disclosure will now be described, by way of example only, with reference to the accompanying drawings, in which:
Fig. 1a shows a system for implementing the operations described herein;
Fig. 1b shows a second configuration of the system of Fig. 1a;
Fig. 2 shows a method for providing a translation;
Fig. 3 shows an example of the method of Fig. 2 implemented as an agentic workflow;
Fig. 4 shows a processing system for implementing the operations described herein.

### DETAILED DESCRIPTION

In overview, in a first aspect, the method disclosed herein relate generally to using a back translation quality assurance process performed by an LLM in order to efficiently provide translated text to a user in response to a natural language user prompt. The methods disclosed herein reduce the number of translation inconsistencies and/or a translation error rate metric by iteratively applying the quality assurance process and generating new translations that account for past errors. This iterative approach leads to a progressive improvement in the error rate. Consequently, a technical effect can be seen as reducing the error rate of natural language text translations.

The method can be implemented as an agentic workflow, where an LLM using a first agent mode performs translation and an LLM using a second agent mode performs quality assurance. This approach allows each process to be executed more efficiently and effectively, as the LLMs can be specifically reconfigured for their respective tasks.

Using the first agent mode or the second agent mode can cause the LLM to be reconfigured. For example, the first agent LLM may utilize a specific subset of its knowledge base tailored to natural language translation. By filtering the knowledge base to include only the relevant subset, the LLM processes less data, reducing resource consumption and improving the efficiency of the translation task. The same can be said for the second agent LLM performing quality assurance.

The LLM operating in the first agent mode and the LLM operating in the second agent mode can either be the same LLM or two distinct LLMs. In the case of a single LLM, it can perform translation in the first agent mode before being reconfigured into the second agent mode to execute quality assurance. When two different LLMs are used, they may have varying characteristics, such as differences in cost, speed, language capabilities, and/or specialized training for specific tasks. By assigning each process to the LLM best suited to its requirements, the tasks can be performed more efficiently, leveraging the configurations optimized for each function. Additionally, smaller LLM models with fewer neural network layers can be employed for lighter-weight processes. Assigning appropriate tasks to smaller LLMs helps optimize the use of computational resources, further enhancing efficiency.

Translation files containing domain or language specific pre-translated phrases can be provided to support the translation process. By incorporating pre-translated phrases, the processing required for translation can be reduced. These files help minimize domain-specific errors before they are flagged as inconsistencies during quality assurance. As a result, the overall processing needed to lower the error rate or reduce the number of inconsistencies is significantly decreased.

Each of the one or more inconsistencies can be, or can be representative of, one or more of: a change in semantics between two translations; omissions of concepts, information, and/or facts; or additions of concepts, information and/or facts. A change in semantics may refer to a difference in the meaning or semantic interpretation of a text when between languages. Omissions of concepts, information and/or facts may refer to omissions from a translated text of concepts, information and/or facts that were present in the source text. Addition of concepts, information, facts may refer to concepts, information and/or facts present in a translated text that were not contained in the original text.

Throughout the method, translation inconsistencies can be represented by an objective error score, which may be generated using a defined similarity metric. By using this objective error score, the system can systematically improve translation quality by reducing the error score or, conversely, increasing a similarity score. This results in translation output that is objectively less erroneous or more accurate, based on the chosen similarity metric. In other words, a metric for determining that a translation is objectively "better" can be provided, such that the disclosed methods obviate the need for a human user to apply their subjective judgement. The amount of additional processing required by the user to correct errors is also reduced after the translation is provided.

Determining an error score based on the one or more inconsistencies can comprise using any suitable similarity measure for two texts, optionally wherein the similarity measure accounts for context. By iteratively improving a provided similarity measure, an objectively better translation can be provided to the user and the error score can be minimised and/or optimised.

Translation can be based on an inconsistency history file, which is updated whenever one or more inconsistencies exceed a predefined error threshold. This allows the system to maintain a record of inconsistencies, preventing the same inconsistency from reappearing. As a result, fewer iterations are required to produce an accurate translation, reducing the resources needed and making the system more efficient. Additionally, the system continuously improves based on the updated inconsistency file, ensuring ongoing refinement.

Generating a second translation additionally based on the identified one or more inconsistencies can comprise using the one or more inconsistencies as negative examples as to prevent the LLM from repeating these erroneous outputs in the second translation. Using the one or more inconsistencies as negative examples can comprise, based on the provided negative examples, one or more of: retraining the LLM, reconfiguring the LLM, updating the model weights of the LLM and updating the model parameters of the LLM.

The method can be performed iteratively, where if the second translation meets the error threshold, a third translation is generated. This process can continue until a translation is produced that does not exceed the error threshold. The final, nth translation can then be provided as the output to the user. Through this iterative approach, the translation is progressively refined to minimize the error rate or maximize the similarity score, resulting in an objectively more effective and accurate method.

A second aspect comprises a system configured to perform one or more methods of the present disclosure. The system can comprise one or more LLMs, a user input interface, and an output means.

A third aspect comprises a computer readable medium storing instructions which when executed cause one or more processing systems to perform the methods disclosed herein.

This overview is provided to introduce in simplified form a selection of concepts that are further described herein. The overview is not intended to identify key or essential features of the invention. Aspects of the present disclosure will now be described in reference to the drawings.

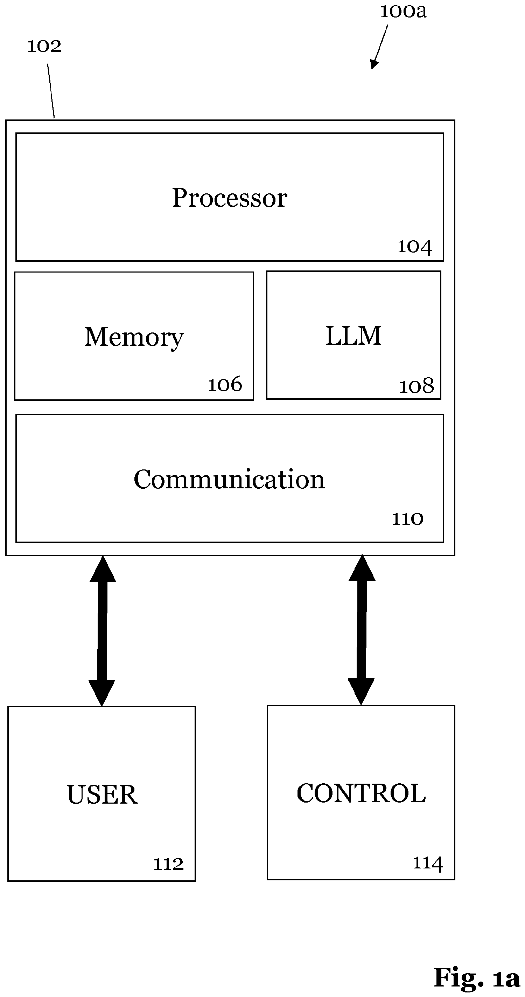

Fig. 1a shows a first system configuration 100a of an example system 100 of the present disclosure comprising a processing system 102 and a user device 112. The system can optionally further comprise a control device 1124 The processing system 102 comprises a processor 104, memory 106 and network interface device 110. The processing system 102 can communicate with the user device 112 and control device 114 using the network interface device 110.

The processor 104 can execute machine readable instructions in the memory 106 in order to implement the large language model 108. The processor 104 can process machine readable instructions in the memory 106 in order to control the processing system 102 to perform the operations disclosed within the present disclosure.

The memory 106 can store a set of machine-readable instructions which can be executed by the processor 104 in order to implement a large language model (LLM) 108. Alternatively or additionally, the LLM 108 can be implemented using a cloud API (not pictured), wherein the cloud API is optionally provided by a third party. The memory 106 can store API client software comprising instructions and/or or code that enable the processing system 102 to interact with the cloud API. The processing system 102 can communicate with the cloud API using the network interface device 110 described below. The memory 106 can store a further set of machine-readable instructions for performing the operations of the present disclosure. The memory 106 can store other data and files which can be used by the LLM 108 and/or processing system 102. For example, the memory 106 can comprise one or more system prompts, translation files, inconsistency history files, model weights, training data, model parameters and/or knowledge base data.

Implementing the LLM 108 can comprise using instructions stored in the memory 106 and/or using a cloud API. The LLM 108 can be a neural network LLM comprising layers, nodes, and connections which has been trained on a dataset such that it can perform one or more natural language processing tasks. The LLM 108 can comprise model weights and parameters optimized for one or more natural language processing tasks.

The network interface device 110 is configured to establish a communication channel between the user device 112 and the processing system 102 such that the processing system 102 and user device 112 can both transmit and send data, information and/or messages. The network interface device 110 can be further configured to establish a communication channel between the processing system 102 and the cloud API such that the processing system 102 and user device 112 can both transmit and send data, information and/or messages in order to implement the LLM 108.

The user device 112 can receive user input, provide an output to a user, and communicate with the processing system 102 via the network interface device 110. In some embodiments of system 100, the processing system 102 further comprises a user input interface and output means. In these embodiments of system 100, the user device 112 is an optional component.

The control device 116 can provide the control device 102 with a system prompt corresponding to a method the control device 102 is assigned to perform. The system prompts provided by the control device 116 may be predetermined and retrieved from a memory of the control device comprising a plurality of system prompts. Alternatively or additionally, the system prompt can be provided by an administrator and/or administrative system using the control device 116.

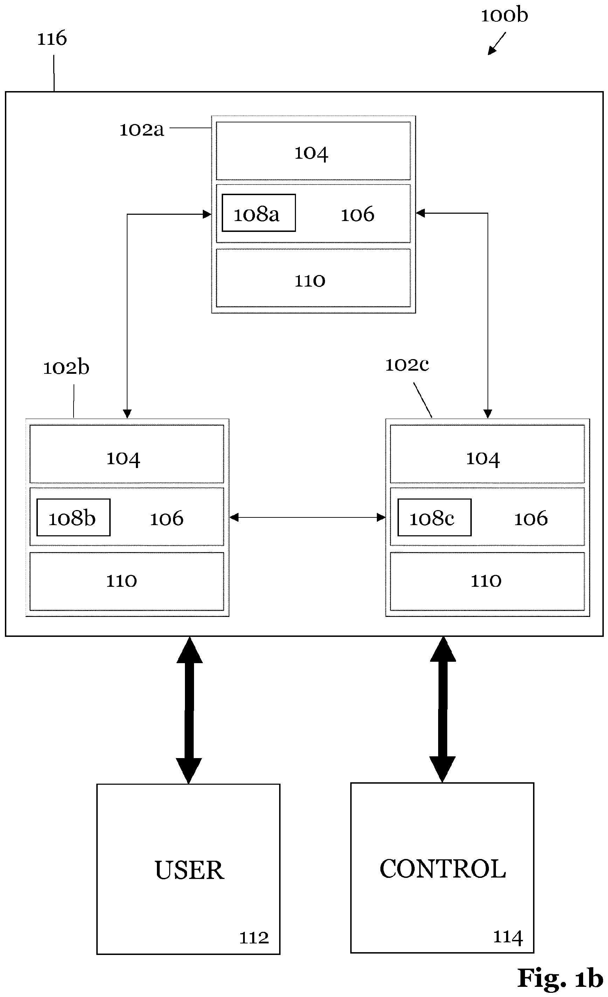

Fig. 1b shows a second system configuration 100b of the system 100 shown in Fig. 1a comprising a plurality of processing systems 102a-c. Processing systems 102a-c of Fig. 1b can be considered to comprise the features of processing system 102 as described above with reference to Fig. 1a. Although only three processing systems 102a-c are shown in Fig. 1b , this is for illustrative purposes only and embodiments with any number of processing systems 102, such as 2 or 4 or more processing systems 102, can be provided and can make use of the methods of the present disclosure. User device 112 can be considered to comprise the features of user device 112 of Fig. 1a as described above.

The network interface devices 110 of the processing systems 102a-c can be configured to provide a communication network between the processing systems 102a-c such that each processing system 102 can transmit and receive data, information and/or messages to/from one or more other processing systems 102a-c and the user device 112.

The LLMs 108a-c of each of the processing systems 102a-c can be operationally similar but may have been trained on different data and/or for different natural language processing tasks. Additionally or alternatively, each of the LLMs 108a-c may be of a different size, speed and/or neural network architecture. A smaller LLM may operate faster, require less computational resources to operate and/or comprise less neural network layers, weights, and/or parameters. Additionally or alternatively, each of the LLMs 108a-c may query different knowledge base data in order to perform operations.

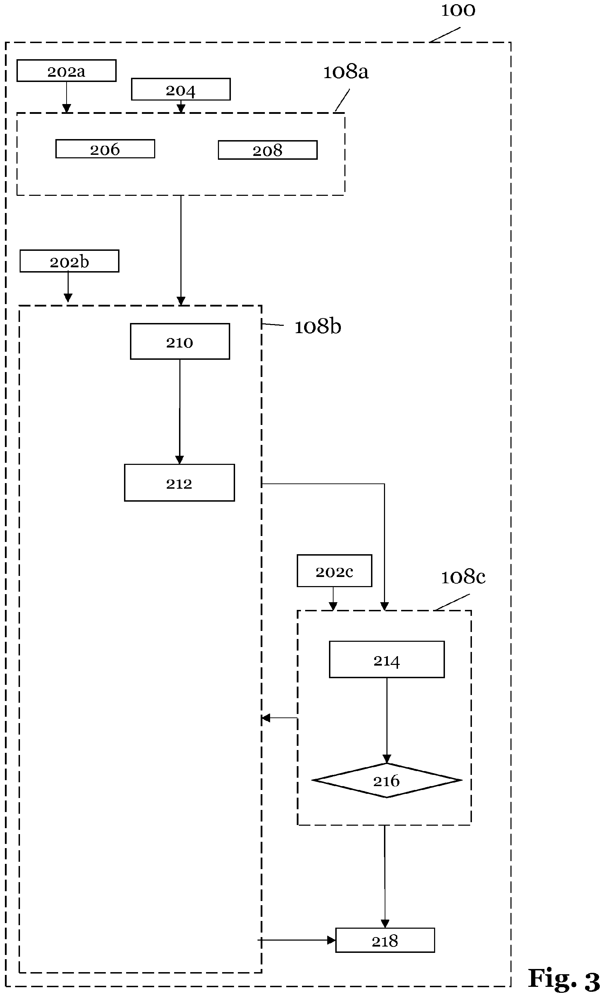

The processing systems 102a-c operate as part of a LLM system 116 wherein each of the processing systems 102a-c implements an LLM 108a-c which can collaborate with each of the other LLMs 108a-c to perform a method. For example, each of the LLMs 108a-c can perform a subset of the operations of a method. The method can be performed in response to receiving a user prompt from a user, for example via the user device 112. Each LLM 108a-c may be optimized for the specific subset of the method it is assigned to perform, thereby achieving a more optimal trade-off between performance and computational resource utilization. Such a system is particularly suitable for use in an agentic workflow, where each LLM 108a-c takes on a different agentic role as described in more detail below in reference to Figure 3.

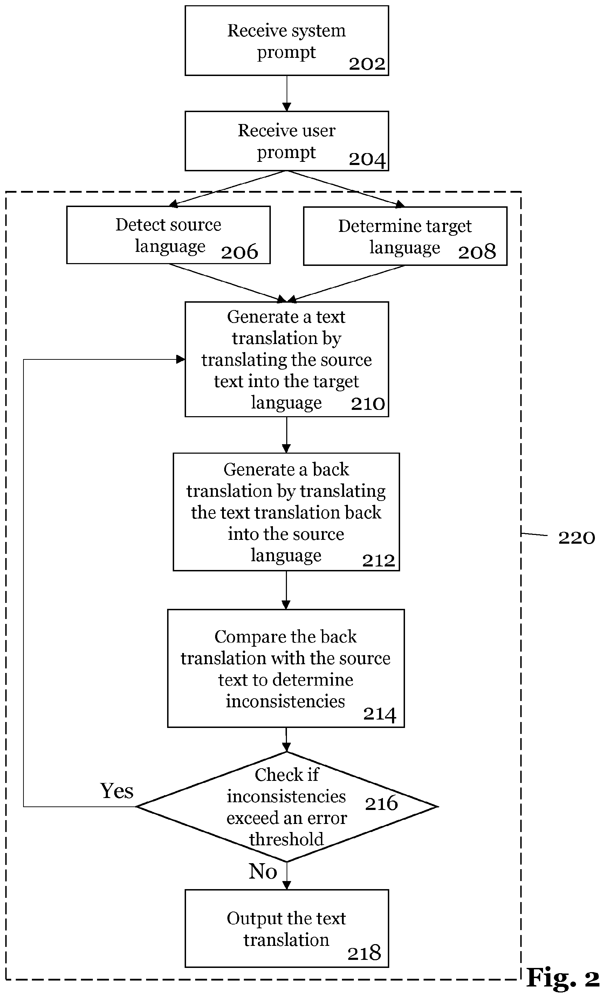

The LLM system 116 can receive instructions, data, system prompts and/or information from a control device 116 which can communicate with each of the processing systems 102 of the LLM system 116. The control device 116 can determine and/or receive device characteristics from each of the processing systems 102a-c in the LLM system 116 and based on the device characteristics, dynamically determine the subset of a method each of the LLMs 108a-c should perform, for example in order to optimise the speed the method is performed and/or optimise the computational resources required to perform the method. The control device 116 can provide each control device 102a-c with a system prompt corresponding to the specific subset of the method the control device in question is assigned to perform. Device characteristics can comprise the current power utilisation of the processor 104a-c for example. That is to say, the control device 116 can use device characteristics to optimally partition a method between one or more LLMs 108a-c of an LLM system 116 and provide a system prompt to each of the control devices corresponding to the portion the device's respective portion of the method. The system prompts provided by the control device 116 may be predetermined and retrieved from a memory of the control device comprising a plurality of system prompts. The system prompt can be provided via a user using the control device 116. The control device can select a system prompt corresponding to the portion of the method assigned to a control device based on a pre-determined relationship. The method can be the method 200 described below with reference to Figs. 2-3.

Fig. 2 shows an example method 200 for efficiently providing a natural language translation using one or more large language models (LLMs). The method can be performed by the system 100 in the system configuration 100a shown in Fig.1a or the system configuration 100b shown in Fig. 1b.

In operation 202 of method 200, the system 100 can receive one or more natural language system prompts which, when processed, causes the one or more LLMs 108 to perform a system method 220. For example, Fig.2 shows an embodiment wherein the system method 220 is a subroutine of method 200 comprising operations 206-218 (described below). The system method 220 can be performed in response to receiving a user prompt, such as the user prompt received in operation 204 of method 200. The system prompt can comprise natural language instructions defining the system method 220 which, when processed by an LLM 108, causes the LLM 108 to perform said system method 220. The one or more system prompts can be received from a control device 114 and/or received from memory 106. Each of the one or more system prompts can cause changes to the internal state of an LLM 108 of the one or more LLMs 108, for example by configuring them as agents as described above and/or causing changes to their weights and/or parameters etc., in the memory 106.

In operation 204 of method 200, the one or more processing systems 102 can receive, via the user device 112 and/or a user input interface of one of the oner or more processing systems 102, a user prompt from a user. The user prompt comprises a natural language source text in a source language. The user prompt also comprises natural language instructions defining a request to translate the source text into a target language.

In operation 206 of method 200, the processing system 102 can use the LLM 108 to detect the source language of the source text. The LLM 108 can use any number of traditional language detection methods, or can apply a language detection approach specific to its internal architecture, such as by processing the source text and/or user prompt to identify language-specific patterns. The system prompt received by the processing system 102 can instruct the LLM 108 on which language detection method to use. If the source language is specified within the natural language instructions of the user prompt, the LLM 108 can determine the source language without performing further analysis of the source text.

In operation 208 of method 200, the processing system 102 can use the LLM 108 to determine, based on the user prompt, the target language. The target language can be determined based on the natural language instructions provided by the user in the user prompt. For example, the LLM 108 can employ any traditional natural language processing methods in order to determine a target language specified by a user within the user prompt. Additionally or alternatively, the LLM 108 can apply a natural language processing method specific to its internal architecture. The system prompt received by the processing system 102 can instruct the LLM 108 on which natural language processing method to use. If a target language cannot be determined at operation 208, the operation can further include providing to the user device 112 and/or an output module of the processing system 102, a prompt to the user to provide the target language. Method 200 can then iteratively repeat operations 204 and 208 until a target language is determined. Method 200 can then proceed to operation 210.

In operation 210 of method 200, the processing system 102 can use the LLM 108 to generate a first translation by translating the source text received in operation 204 from the source language identified in operation 206 to the target language determined in operation 208. The LLM 108 can use any traditional natural language translation methods in order to generate the first translation. Additionally or alternatively, the LLM 108 can apply a natural language translation method specific to its internal architecture. The generated first translation can be stored in the memory of the processing system 106. The system prompt received by the processing system 102 can instruct the LLM 108 on which natural language translation method to use. In generating the first translation, the LLM 108 can use one or more translation files stored in memory 104 wherein the translation files can be language and/or domain specific and can comprise pre-translated natural language phrases. In generating the first translation, the LLM 108 can use inconsistency history file comprising one or more inconsistencies and/or output errors produced by the LLM 108. The one or more inconsistencies and/or output errors produced by the LLM 108 can be used by the LLM 108 as negative examples in order to change the internal state of the LLM 108 by updating the weights and/or parameters of the LLM 108 in order to prevent the reoccurrence of said errors and/or inconstancies in subsequent outputs. The inconsistency history file is discussed in more detail below with reference to operation 216 of method 200.

At operation 212 of method 200, the processing system 102 can use the LLM 108 to generate a back translation by translating the first translation from the target language into the source language. As described with reference to the generation of the first translation in operation 210 of method 200, the back translation can similarly be generated using one or more traditional natural language translation methods, a method specific to the internal state of the LLM 108, one or more translation files and/or one or more inconsistency history files. The system prompt received by the processing system 102 can instruct the LLM 108 on which language translation method to use and/or which files to use.

At operation 214 of method 200, the processing system 102 can use the LLM 108 to compare the back translation with the source text to determine one or more inconsistencies. The one or more inconsistences comprise at least one of: changed semantic meaning; omissions of concepts, information and/or facts; and, additions of concepts, information and/or facts. A change in semantic meaning between two translations refers to a difference in meaning or interpretation of a text when translated from one language to another. Identifying a change in semantic meaning assists the processing system 102 in providing a translation which preserves the original meaning of the source text as accurately as possible. Detecting omissions and/or additions of concepts, information and/or facts allows the processing system 12 to preserve any information that is present in the translated text more accurately. The LLM 108 can use any known natural language processing methods to determine the one or more inconsistencies and/or may use a method specific to the internal architecture and functioning of the LLM 108. The one or more inconsistencies determined at operation 214 can be used to update an inconsistency history file, such as the inconsistency history file used when generating the first translation at operation 210 or the back translation at operation 212.

At operation 216 of method 200, the processing system 102 can use the LLM 108 to determine whether the one or more inconsistencies determined in operation 214 exceed a predetermined error threshold. Determining whether the one or more inconsistencies exceeds an error threshold can comprise determining if the number and/or frequency of inconsistencies identified exceeds a threshold number. Determining whether the one or more inconsistencies exceeds an error threshold can comprise determining an error score based on the one or more inconsistencies and comparing the error score to a predetermined error threshold. The LLM 108 may determine an error score corresponding to the one or more inconsistencies using any traditional natural language error metrics such as, but not limited to, a Levenshtein distance, a Jaccard similarity, a cosine similarity, a word embedding similarity, a topic modelling score, an alignment score, a BERT similarity score, a Universal Sentence Encoder similarity score, a Bilingual Evaluation Understudy (BLEU) score, a Metric for Evaluation of Translation with Explicit Ordering (METEOR) score, a Kullback-Leibler Divergence (KLD) score, or a Dynamic Time Warping (DTW) score. Alternatively or additionally, the LLM 108 may use a method based on its internal functioning to determine an error score corresponding to the one or more inconsistencies. The method employed by the LLM 108 can be determined based on the system prompt. If the processing system determines that the one or more inconsistencies determined in operation 214 do not to exceed a predetermined error threshold, method 200 can proceed to operation 218. If the one or more inconsistencies determined in operation 214 are determined to exceed the predetermined error threshold, method 200 loops back to operation 210 and a second translation is generated based on the one or more inconsistencies identified in operation 214, optionally by using the inconsistency history file and/or providing the one or more inconsistencies to the LLM as negative examples. As part of the iterative loop, the method 200 can then proceed to perform operations 212-216 again. Method 200 can iterate the loop comprising operations 210-216 until a translation with inconsistencies which do not exceed the error threshold is generated.

At operation 218 of method 200, the processing system 102 can use the LLM 108 to output the translation which was determined to not exceed the error threshold at operation 216. The translation can be output by the LLM 108 and subsequently provided, using the communication means 108, to the user device 112 for presentation to a user. Additionally or alternatively, once the translation has been output by the LLM 108 it can be provided to the user via output means of the processing system 102.

Fig. 3 shows an implementation of the method 200 of Fig. 2 using an example agentic workflow. Like reference numerals refer to like steps.

An LLM 108 can be updated by a system prompt in order to operate in one or more agent modes. Each agent mode can allow the LLM 108 to complete one or more specific processes, methods and/or tasks more efficiently and/or faster. The system prompt can comprise agent-set up instructions to update an LLM 108 to operate in a specific agent mode, optionally by configuring the internal state of the LLM 108 and/or controlling its output. The agent set-up instructions can comprise: a role description (translator, translation system, Quality Assurance, quality assurance system, manager, etc.,); instructions for one or more methods and/or processes the LLM 108 should use to perform operations; and/or instructions not to perform one or more methods and/or processes.

In the example agentic workflow of Fig. 3, there is a first LLM 108a, second LLM 108b and a third LLM 108c. Each of the LLMs 108a-c operates in a different agent mode upon receiving 202a-c a respective system prompt. For example, the first LLM 108a receives 202a a first system prompt and, using a first agent mode, performs operations 206-208 of method 200 in response to receiving 204 a user prompt. By operating in the first agent mode, the first LLM 108 can perform operation 206 and operation 208 more efficiently, more accurately and/or faster. The first agent mode can be an initiation mode and the agent set-up instructions can comprise a language detection role description and/or instructions to use one or more natural language processing methods. The first system prompt instructs the first LLM 108 to operate in the first agent mode and to perform operations 206-208 of method 200.

Similarly, the second LLM 108b receives 202b a second system prompt and, using a second agent mode, performs operations 210-212 of method 200. By operating in the second agent mode, the second LLM 108 can perform operation 210 and operation 212 more efficiently, more accurately and/or faster. The second agent mode can be a translator mode and the agent set-up instructions can comprise a translator or translation system role description, instructions to use one or more natural language translation methods, instruction to use one or more translation files and/or instructions not to output one or more inconsistencies from the inconsistency history file. The second system prompt instructs the second LLM 108b to operate in the second agent mode and to perform operations 210-212 of method 200.

The third LLM 108c receives 202c a third system prompt and, using a third agent mode, performs operations 214-216 of method 200. By operating in the third agent mode, the third LLM 108c can perform operation 214 and operation 216 more efficiently, more accurately and/or faster. The third agent mode can be a quality assurance mode and the agent set-up instructions can comprise a quality assurance or quality assurance system role description, instructions to use one or more natural language error, distance and/or comparison methods. The third system prompt instructs the third LLM 108c to operate in the third agent mode and to perform operations 214-216 of method 200. The output of operation 218 can be provided by the first LLM 108a operating in the first agent mode, the second LLM 108b operating in the second agent mode, or from the memory 106 of a processing system 102 in system 100.

In embodiments wherein the agentic workflow of Fig. 3 is implemented by the system 100a of Fig.1a, the LLMs 108a-c are implemented as a single LLM 108 on the single processing system 102 which receives 202a-c the various system prompts in order to update the agent mode it operates in. In such embodiments, the system prompts can be received as a single system prompt, optionally wherein the single system prompt comprises a plurality of set-up instructions. For example, a single system prompt comprising various system prompts can comprise method instructions to perform a plurality of operations 200 and a plurality of agent set-up instructions, wherein each of the agent set-up instructions comprise instructions to perform a subset of the plurality of operations. The system prompt(s) instructs the LLM 108 to change its internal structure to operate in a second agent mode after operation 208 or if the check at 216 results in a loop. The system prompt(s) also instructs the LLM 108 to change its internal structure to operate in a third agent mode after operation 212.

In embodiments wherein the agentic workflow of Fig. 3 is implemented by the system 100b of Fig.1b, each of the LLMs 108a-c can be implemented as different LLMs 108a-c of different processing systems 102a-c, wherein each LLM 108a-c receives 202a-c a respective system prompt and operates in a respective agent mode. When processing system 102a uses the LLM 108a in a first agent mode to perform operation 206, 208, it can provide the determined target language, source language and the source text to the second processing system 102b using the network interface device 110. When the second processing system 102b receives output from the first processing system 102a or the third processing system 102b, in response it can perform operations 210- 212 using LLM 108b in a second agent mode and provide the back translation as output to the third processing system 102b using the network interface device 110. Upon receiving the output from the second processing system 102b, the third processing system 102c can use the LLM 108c in a third agent mode to perform operations 214-216 and can: provide the determined one or more inconsistencies and/or updated inconsistency history file to the second processing system as output in response to determining the error threshold has been exceeded. Alternatively, in response to determining the error threshold has not been exceeded the third processing system 102c provide data indicating the translation did not exceed the error threshold to the second processing system 102b or perform operation 218. Optionally, operation 218 can be performed by the second processing system 102b upon receiving data indicating the translation did not exceed the error threshold from the third processing system.

Although Fig. 3 shows three LLMs 108a-c, this is illustrative only and there could be less LLMs 104, for example 2, or more LLMs 104. An embodiment using a system 100 with two LLMs 104 in system 100 could, for example, use a first LLM 108a to perform operations 106-112 using a first agent mode and a second LLM 108b to perform operations 114-118 using a second agent mode. The first agent mode can be a translator or translation system agent mode and the second agent mode can be a quality assurance system agent mode

The LLMs 108a-c could dynamically receive system prompts from the control device 116 in order to dynamically adapt the partitioning of the method 200 between the processing systems 102 and the LLMs 104 based on device characteristics.

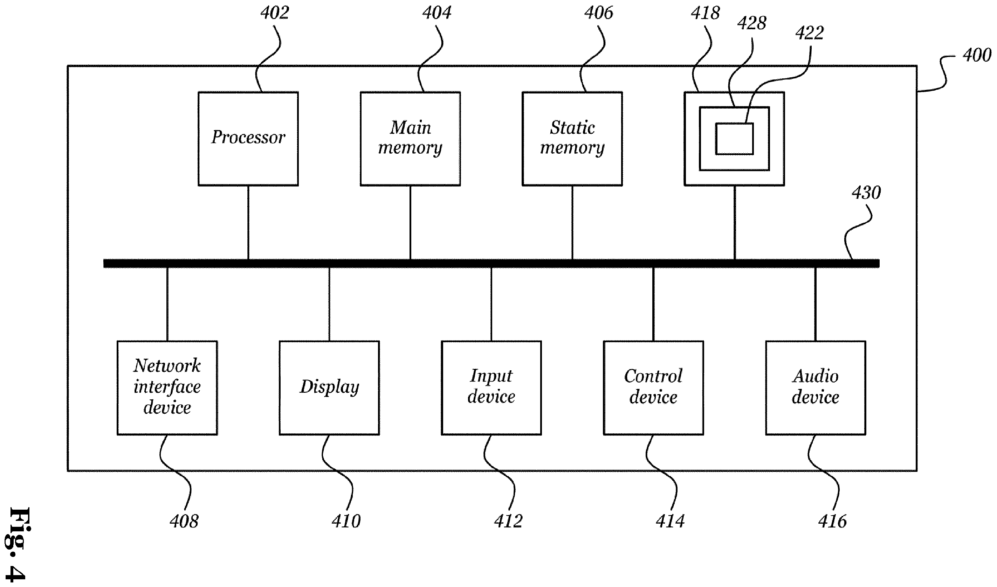

Some or all of the disclosed methods may be implemented using a computer apparatus or processing system. Accordingly, the methods described herein may form all or part of a computer-implemented method. An example processing system is shown in Fig. 4. The example processing system shown in Fig.4 can be used to implement processing system(s) 102, user device 112 and/or control device 116 of Figs. 1a-b.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein. Processor 402 can be used to implement the processor 104 of Figs. 1a-b.

The processing system 400 may further include a network interface device 408. The network display device 408 can be used to implement the network interface device 110 of Figs. 1a-b. The processing system 400 may any a video display unit 410 (e.g., a liquid crystal display (LCD) or a cathode ray tube (CRT)) and/or an audio device 416 (e.g., a speaker). The video display unit 410 and/or audio device 416 can be used to implement the output discussed above in reference to the processing system 102 of Figs. 1a-b. The processing system 400 can comprise an alphanumeric input device 412 (e.g., a keyboard or touchscreen) and/or a cursor control device 414 (e.g., a mouse or touchscreen). The input device 412 and/or the cursor control device 414 can be used to implement the user input interface discussed above in reference to the processing system 102 of Figs. 1a-b.

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428. The memory 106 of the processing system 102 of Figs.1a-1b can be implemented using one or more machine-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A computer-implemented method comprising:
receiving, by one or more large language models, LLMs , one or more natural language system prompts which, when processed, causes the one or more LLMs to perform a system method, the system method comprising:
detecting the source language of a source text, wherein the source text is provided in natural language;
determining, based on a user prompt, a target language;
generating, a first translation by translating the source text from the source language to the target language;
generating, a back translation by translating the first translation from the target language to the source language;
comparing, the back translation with the source text to determine one or more inconsistencies;
determining whether the one or more inconsistencies exceed an error threshold;
based on the one or more inconsistencies exceeding the error threshold, generating, based on the one or more inconsistencies, a second translation by translating the source text from the source language to the target language; and
based on the one or more inconsistencies not exceeding the error threshold, outputting, to a user, the first translation;
processing, by the one or more LLMs, the one or more system prompts;
receiving, by the one or more LLMs, via a user device, a user prompt comprising the source text; and
providing, by the one or more LLMs, using the system method, the first translation or the second translation.

2. The method of claim 1 wherein generating the first translation, generating the back translation, and generating the second translation comprise using a first agent mode; and
wherein comparing the back translation with the source text comprises using a second agent mode.

3. The method of claim 2, wherein using the first agent mode comprises configuring a first LLM of the one or more LLMs as a translation system; and
wherein using the second agent mode comprises configuring a second LLM of the one or more LLMs as a quality assurance system.

4. The method of claim 3, wherein the first LLM and the second LLM are different LLMs and the second LLM has less parameters and/or weights than the first LLM.

5. The method of any preceding claim further comprising:
providing one or more translation files comprising pre-translated phrases wherein the one or more translation files are each language specific and/or domain specific; and
wherein generating the first translation, generating the back translation and/or generating the second translation comprises translating using a translation file of the one or more translation files.

6. The method of any preceding claim wherein the one or more inconsistences comprise at least one of:
a. changed semantic meaning;
b. omissions of concepts, information and/or facts; and
c. additions of concepts, information and/or facts.

7. The method of any preceding claim wherein determining whether the one or more inconsistencies exceeds an error threshold comprises:
determining an error score based on the one or more inconsistencies; and
comparing the error score to the error threshold.

8. The method of claim 7 wherein determining an error score based on the one or more inconsistencies comprises determining one or more of:
a Levenshtein distance;
a Jaccard similarity
a cosine similarity;
a word embedding similarity;
a topic modelling score;
an alignment score;
a BERT similarity score;
a universal sentence encoder similarity score;
a Bilingual Evaluation Understudy (BLEU) score;
a Metric for Evaluation of Translation with Explicit Ordering (METEOR);
a Kullback-Leibler Divergence (KLD) score; or
a Dynamic Time Warping (DTW) score.

9. The method of any preceding claim further comprising, based on the one or more inconsistencies meeting the error threshold, updating an inconsistency history file, and wherein generating the first translation, generating the back translation and/or generating the second translation comprises translating based on the inconsistency history file.

10. The method of any preceding claim wherein generating, based on the one or more inconsistencies, a second translation comprises using, by the one or more LLMs, the one or more inconsistencies as negative examples.

11. The method of any claim further comprising:
generating, a second back translation by translating the second translation from the target language to the source language;
comparing, the second back translation with the source text to determine one or more further inconsistencies;
determining the one or more further inconsistencies do not exceed an error threshold; and,
based on the one or more further inconsistencies not exceeding the error threshold, outputting, to a user, the second translation.

12. A processing device comprising:
one or more LLMs;
a communication means;
a memory; and
wherein the processing device is configured to perform the method of any preceding claim.
